# EUROPEAN PATENT APPLICATION

(11) **EP 4 349 897 A1**
(43) Date of publication of application: **10.04.2024**
(21) Application number: 22306503.8
(22) Date of filing: 07.10.2022
(51) Int. Cl.: C08K 3/34, B32B 5/26, H01B 3/47, H01B 3/48, H01B 7/28

(54) **CABLE WITH IMPROVED ADSORPTION OF CHEMICAL BY-PRODUCTS**

(71) Applicant: Nexans, 92400 Courbevoie (FR); Freudenberg Performance Materials SE & Co. KG, 69469 Weinheim (DE)
(72) Inventor: PEREGO, Gabriele, 20144 MILANO (IT); MAZEL, Christelle, 38300 RUY (FR); MERLE, Daphné, 69200 VENISSIEUX (FR); SAHYOUN, Jihane, 69100 VILLEURBANNE (FR); JARVID, Erik Markus, 44242 KUNGÄLV (SE); KRAMER, Dominic, 60323 FRANKFURT (DE); SENNE, Sarah, 68542 HEDDESHEIM (DE); RODRIGUEZ CHARLES, Maria Teresa, 08225 BARCELONA (ES); COLLET GONZALEZ, Ambros, 08440 CARDEDEU (ES)
(74) Representative: Ipsilon

(57) **Abstract**

The present invention relates to a composite material, preferably in the form of a tape or a ribbon, comprising at least one textile fabric substrate, at least one polymer binder, and at least one fibrous clay, to a process for the manufacture of said composite material, to a cable comprising at least said composite material, and to a process for the manufacture of said cable.

## Description

The present invention relates to a composite material, preferably in the form of a tape or a ribbon, comprising at least one textile fabric substrate, at least one polymer binder, and at least one fibrous clay, to a process for the manufacture of said composite material, to a cable comprising at least said composite material, and to a process for the manufacture of said cable.

The invention applies preferably to the field of high voltage-(especially greater than 60 kV, which may be up to 800 kV) electrical cables, more preferably to high voltage direct current (DC) electrical cables (also known as HVDC cables).

Electrical cables generally comprise a central electrical conductor and at least one electrically insulating layer that can be crosslinked by techniques well known to a person skilled in the art.

This type of crosslinked layer generally comprises protective agents intended to control and reduce the absorption of water and to guarantee the electrical insulation of the cable over time, for example in case of physical damage of metallic protection sheath.

The crosslinked layer can be obtained from a composition based on a polyolefin polymer matrix combined with an organic peroxide such as dicumyl peroxide or tert-butylcumyl peroxide (i.e. cumyl peroxide). During the crosslinking of said composition, the peroxide decomposes and forms crosslinking by-products such as methane, acetophenone, cumyl alcohol, acetone, tert-butanol, α-methylstyrene and/or water. These last two byproducts are formed by the dehydration reaction of cumyl alcohol. The presence of polar compounds such as cumyl alcohol and acetophenone can affect negatively the performances of cables, and more particularly of HVDC cables by several mechanisms. The polar compounds can for example increase the electrical conductivity of the crosslinked layer which limits the cable operating temperature, and/or can increase space charge phenomena. Accumulation of space charges within the dielectric material can create locally an increase of the electrical field which may lead to a premature failure of the cable and/or to electrical discharges and eventually insulation breakdown.

The international application WO2014/075727 A1 has thus proposed a method for crosslinking a polyolefin material avoiding presence of polar by-products, said method comprising the steps of subjecting a polyolefin material to electromagnetic radiation to obtain a crosslinked polyolefin, followed by annealing of the obtained crosslinked polyolefin material, wherein the irradiated polyolefin material has a thickness greater than 6 cm. However, this solution requires specific equipment and is limited to a certain thickness of the polyolefin material.

The aim of the present invention is thus to overcome the drawbacks of the prior art and to provide an electrical cable, preferably a high voltage electrical cable, which limits the detrimental effect of the crosslinking by-products and/or the risk of accumulation of space charges in the layer(s) during the cable lifespan.

Another aim of the present invention is to provide a process for the manufacture of a cable based on crosslinked layer(s) which is simple, limits the detrimental effect of the crosslinking by-products and/or the risk of accumulation of space charges in the layer(s) during the cable lifespan, and which does not require any specific crosslinking equipment.

A first object of the present invention is a composite material, preferably in the form of a tape or a ribbon, wherein it comprises at least one textile fabric substrate, at least one polymer binder, and at least one fibrous clay.

Thanks to the composite material, and more particularly the presence of the fibrous clay which is homogeneously dispersed in the composite material, the capture of crosslinking by-products is efficient, and the composite material can be used in a cable so as to extract said by-products resulting from degradation of peroxide compounds. Thus, the detrimental effect of the crosslinking by-products and/or the risk of accumulation of space charges in the layer(s) during the cable lifespan are reduced.

### The fibrous clay

The fibrous clay has a fibrous structure. In other terms, it means that the clay has a fibrous morphology and/or is at least partly in the form of fibers.

In a preferred embodiment, the fibrous clay is a phyllosilicate, preferably containing magnesium.

The phyllosilicate can be selected from the group consisting of sepiolites, palygorskites, and attapulgites.

It is noted that palygorskite and attapulgite are often considered in the literature as being a sole and unique phyllosilicate.

In a preferred embodiment, the fibrous clay is a fibrous nanoclay. In other terms, the fibrous clay has a smallest dimension which is less than or equal to about 250 nm (notably from 1 to 250 nm), preferably less than or equal to about 200 nm (notably from 1 to 200 nm), more preferably less than or equal to about 100 nm (notably from 1 to 100 nm, in particular from 2 to 100 nm), and even more preferably less than or equal to about 50 nm (notably from 1 to 50 nm, in particular from 5 to 50 nm).

In one embodiment, the fibrous clay is at least partly and preferably entirely in the form of fibers, each fiber being represented by:
- a length (Li), extending in a main direction of elongation,
- two dimensions (Di) and (D₂), referred to as orthogonal dimensions, extending along two transverse directions that are orthogonal to one another and orthogonal to said main direction of elongation, said orthogonal dimensions (D₁, D₂) being smaller than said length (Li), said two dimensions (D₁, D₂) preferably defining a cross section.

The two orthogonal dimensions (D₁, D₂) can be the diameter (D) of its cross section, or the two orthogonal directions are its width (W) (first orthogonal dimension) and its thickness (E) (second orthogonal dimension).

The fibers can also be defined by two ratios (F₁) et (F₂), referred to as shape factors or aspect ratios, between said length (L₁) and each of the two orthogonal dimensions (Di) and (D₂), wherein the length (L₁) is greater than the two orthogonal dimensions (Di) and (D₂).

The expression "shape factor" means the ratio between the length (L₁) of a fiber, and one of the two orthogonal dimensions (D₁, D₂) of said fiber.

The smallest dimension defined above can be the diameter (D) or the thickness (E).

Preferably, said fibers have at least one orthogonal dimension (Di) or (D₂) ranging from about 1 and 200 nm, more preferably ranging from about 2 and 100 nm, still more preferably ranging from about 5 and 50 nm.

Preferably, said fibers have a length (L₁) of less than or equal to about 10 µm, more preferably ranging from about 0.05 and 5 µm, and still more preferably ranging from about 0.10 and 3 µm.

In particular, said fibers have a shape factor of at least about 2, preferably of at least about 3, and more preferably of at least about 5.

Said fibers can have a shape factor of at most about 200, and preferably of at most about 150.

Said fibers can have a shape factor ranging from about 2 and 200, preferably ranging from about 2 and 150, more preferably ranging from about 3 and 150, and even more preferably ranging from about 5 and 150.

The fibrous clay has preferably a specific surface area of at least about 80 m²/g, more preferably of at least about 100 m²/g, and still more preferably of at least 150 m²/g, said specific surface area being calculated by the BET method (i.e. the Brunauer, Emmett and Teller method, 1938).

Thanks to this minimum specific surface area, the composite material displays improved properties in terms of absorption and/or rheology.

The fibrous clay has preferably a specific surface area of at most about 500 m²/g, more preferably of most about 450 m²/g, and still more preferably of at most 400 m²/g, said specific surface area being calculated by the BET method (i.e. the Brunauer, Emmett and Teller method, 1938).

The fibrous clay has preferably a specific surface area ranging from about 80 m²/g to 500 m²/g, for example from about 80 m²/g to 450 m²/g, or from about 80 m²/g to 400 m²/g, or from about 100 m²/g to 500 m²/g, or from about 100 m²/g to 450 m²/g, or from about 100 m²/g to 400 m²/g, or from about 150 m²/g to 500 m²/g, or from about 150 m²/g to 450 m²/g, or from about 150 m²/g to 400 m²/g, said specific surface area being calculated by the BET method (i.e. the Brunauer, Emmett and Teller method, 1938).

In one preferred embodiment, the fibrous clay fibers have a needle-shaped morphology.

The fibrous clay can be an organically modified fibrous clay. Thanks to organic modification of the fibrous clay, the polarity of said fibrous clay can be easily modulated/adjusted, so as to improve its dispersion within the composite material.

Examples of fibrous clays, which can be used according to the present invention, are the sepiolites Pangel S9 or Pansil 2 or the organically modified sepiolites of the Pangel W or B series, commercialized by Tolsa Group.

The fibrous clay is preferably selected from the group of sepiolites. The capture or extraction of crosslinking by-products, and more specifically cumyl alcohol, has been found to be particularly efficient with such type of fibrous clay.

Sepiolite is a hydrated Mg phylosilicate with fibrous morphology formed by blocks and cavities (tunnels) growing in the direction of the fibers. Each structural block is composed of a central Mg sheet sandwiched between two tetrahedral silica sheets.

Preferably, the composite material comprises fibrous clay in a weight range from about 1% to about 80% by weight, preferably from about 3% to about 30% by weight, or from about 30% to about 60% by weight, or from about 5% to about 15% by weight, or from about 40% to about 60% by weight, with respect to the total weight of the composite material.

The fibrous clay is preferably in the form of a powder. This enables the addition and the dispersion of the fibrous clay in the composite material so as to form a homogeneous material. This also enables for a quick and homogenous absorption of crosslinking by-products.

### The textile fabric substrate

In a preferred embodiment, the textile fabric substrate is a woven fabric, a knitted fabric, and/or a nonwoven fabric. Preferred is a woven fabric or a nonwoven fabric.

Especially, the textile fabric is a nonwoven fabric according to DIN EN ISO 9092 (2019-08).

The nonwoven fabric can be a carded nonwoven, a wetlaid nonwoven, and/or a spunlaid nonwoven fabric.

Preferably the nonwoven fabric is a carded nonwoven fabric, so that a beneficial combination of homogeneity and mechanical strength can be realized. Preferably, the nonwoven fabric shows a higher share of fibres in machine direction than in cross direction. This leads to higher tensile strength in machine direction and is beneficial for the use as tape or ribbon and more particularly in the application in a cable.

In a preferred embodiment, the nonwoven fabric comprises fibres from the group consisting of polyolefin fibres; polyester fibres; especially polyethylene terephthalate fibres, polybutylene terephthalate fibres, and/or copolyester fibres; polyphenylene sulfide fibres; polyamide fibres; especially polyamide 6.6 fibres (Nylon^{®}), polyamide 6.0 fibres (Perlon^{®}); polyvinyl chloride fibres; polyacrylonitrile fibres; polyimide fibres; aramide fibres; viscose fibres; cellulose fibres; carbon fibres; glass fibres; and their mixtures.

Preferably, the nonwoven fabric contains polyester fibres, especially polyethylene terephthalate fibres and/or copolyester fibres, due to their good mechanical strength, thermal stability and low cost.

The nonwoven fabric is bonded mechanically, thermally, and/or chemically. Preferably, the nonwoven fabric is thermally and/or chemically bonded, so that materials of high strength and low thickness can be realized. This can be achieved in calandered nonwoven fabrics where the fibre bonding takes place by means of temperature and mechanical pressure.

For chemically bonded nonwoven fabrics, fibre binding agents are generally applied. Suitable binding agents for nonwoven fabrics are chemicals like polyacrylates, polyvinyl acrylates, polyvinyl acetates, polystyrene acrylates, polyethylene vinyl acetate (EVA), styrene butadiene rubber (SBR), acrylonitrile butadiene rubber (NBR), polyvinyl-ethylene-vinyl chloride, polyvinyl alcohol, polyurethanes, starch, starch derivatives, as well as mixtures or co-polymers of thereof.

The fibre binding agent is generally applied by means of standard procedures, e.g. foam or foulard impregnation, knife-coating, spray coating, and/or kiss-coating.

The fibre binding agent can contain process aids, like foaming agents, anti-foaming agents, and/or wetting agents. The fibre binding agent can also contain additional additives like conductive materials, e.g. carbon black, graphite or graphene, and/or flame-retardant additives like ammonium phosphates or nitrogen containing phosphorous salts. The additives can be mixed with the fibre binding agent and applied to the textile fabric substrate in form of an impregnation mixture.

The composite material preferably comprises a textile fabric substrate in a range from about 10% to 50% by weight, and more preferably from about 20% to 40% by weight, with respect to the total weight of the composite material.

The textile fabric substrate can act as a support of the fibrous clay.

### The polymer binder

The polymer binder facilitates the dispersion of the fibrous clay within the composite material and/or avoids loss of the fibrous clay during handling of the tape, more particularly when the fibrous clay is in the form of a powder.

In a preferred embodiment, the polymer binder is selected from the group consisting of polyacrylates, polyvinyl acrylates, polyvinyl acetates, polystyrene acrylates, polyethylene vinyl acetate (EVA), styrene butadiene rubber (SBR), acrylonitrile butadiene rubber (NBR), polyvinyl ethylene vinyl chloride, polyvinyl alcohol, polyacrylic acid, polyurethanes, polyesters, copolyesters, polyamides, co-polyamides, polycarbonates, polyolefins, silicones, starch, starch derivatives, as well as mixtures and co-polymers of thereof.

Preferably, the polymer binder is a polyacrylate, a polystyrene acrylate, a polyvinyl alcohol, or a mixture thereof.

The polymer binder can contain process aids, like foaming agents, anti-foaming agents, and/or wetting agents. The polymer binder can also contain additional additives like conductive materials, e.g. conductive carbon black, graphite, or graphene, and/or activated carbon, and/or mineral fillers, and/or flame-retardant additives like ammonium phosphates or nitrogen containing phosphorous salts, and/or corrosion inhibitors.

In a preferred embodiment the polymer binder contains at least one conductive material, and more preferably conductive carbon black.

In a preferred embodiment, the polymer binder functions as fiber binding agent or forms a part of the fibre binding agent for the textile fabric substrate.

The composite material preferably comprises the polymer binder, in a range from about 10% to 80% by weight, more preferably from about 20% to 80% by weight, especially from about 40% to 70% by weight with respect to the total weight of the composite material.

The polymer binder has preferably the following physico-chemical and/or mechanical properties: high mechanical strength in wet and dry conditions, high ageing and thermal stability, high compatibility with fillers and additives.

### The composite material

The composite material can be in the form of roll good. Preferably the composite material is in the form of a tape or a ribbon. This facilitates its application around an electrically conductive elongated element of a cable, and/or at least one layer of a cable.

The composite material and/or tape and/or ribbon can be manufactured in a wide range of thicknesses. This allows for a tailor-made use in various applications. The composite material and/or tape and/or ribbon can show a thickness from about 0.1 to about 3 mm or from about 0.1 to about 2 mm. For cable applications where the available space is limited, the composite material should not lead to a significant increase of the cable diameter while at the same time guaranteeing efficient capture of the crosslinking by-products. For these cases, thickness below about 1 mm, e.g. from about 0.1 mm to about 0.8 mm or from about 0.3 mm to about 0.7 mm is preferred. In some cable applications, the composite material and/or tape and/or ribbon can also have a cushioning function. In these cases, a thickness from about 1,0 mm to about 3,0 mm, e.g. from about 1.1 mm to about 2.3 mm, or from about 1.2 mm to about 1.8 mm is preferred. The thickness of the composite material is measured according to ISO 9073-2 (1995-03).

Preferably, the composite material and/or tape and/or ribbon is characterized by a tensile strength in machine direction (MD) of more than 100 N/5cm.

In general, tensile strength can be modulated depending on the application, e.g. from about 100 N/5cm to about 1500 N/5cm and/or from about 150 to about 800 N/5cm, especially from about 150 to about 600 N/5cm. This is advantageous for cable applications, since tapes are usually applied by wrapping procedures and high tensile strength in MD is generally needed for such procedures.

In a preferred embodiment, the composite material shows high tensile strength, e.g. above about 270 N/5cm in MD at low thickness, e.g. below about 2 mm, especially in range from about 0.1 mm to about 1.0 mm. Tensile strength is measured according to ISO 9073-3 (1989-07).

The area weight of the composite material can vary in wide ranges. Preferably, the composite material shows an area weight according to ISO 9073-1 (1989-07) from about 25 to about 500 g/m², preferably from about 50 to about 400 g/m², especially from about 50 to about 300 g/m².

Preferably, the air permeability of the composite material ranges from about 0 l/m²/s to about 5000 l/m²/s, especially from about 0 l/m²/s to about 3000 l/m²/s.

In a preferred embodiment, the composite material is a porous material, showing an air permeability of 50 to 1500 l/m²/s. The porosity is advantageous for a quick uptake of crosslinking by-products. Air permeability is measured according to DIN EN ISO 9237 (1995-12) at 200 Pa air pressure.

In a preferred embodiment, the composite material is electrically conductive, e.g. with an electrical volume resistivity according to DIN 54345-1 (1992) lower than about 2 MOhms^{∗}cm, preferably lower than about 1,5 MOhm^{∗}cm, more preferably lower than 1 MOhm^{∗}cm.

The composite material can further comprise one or more additives, for example selected from superabsorbent materials, water blocking agents, corrosion inhibitors, flame-retardant agents, hyper-crosslinked polymers, and/or activated carbon. Superabsorbent materials are preferred as additives.

Superabsorbent materials are different from the polymer binder mentioned in the present invention. Superabsorbent materials are generally crosslinked.

In a preferred embodiment the composite material is coated with a superabsorbent material (so as to form a superabsorbent coating), e.g. with partially neutralized polyacrylic acid, polymethacrylic acid, polyvinyl sulfonic acid, polyacrylamides, cellulose derivative, starch-based derivative, and/or their copolymer, and/or mixtures.

Preferred superabsorbent material is partially neutralized polyacrylic acid.

In a preferred embodiment, the superabsorbent coating is applied to the composite material in the form of particles or powder. The add-on weight of the superabsorbent coating ranges from 5 g/m² to 200 g/m², preferably from 10 g/m² to 120 g/m², and especially from 20 g/m² to 100 g/m².

In another preferred embodiment, the composite material forms a part of a multilayer or sandwich construction where a superabsorbent coating as defined above is placed between two layers of the composite material.

### The preparation of the composite material

A second object of the present invention is a method for the manufacture of the composite material as defined in the first object of the present invention, wherein said method comprises at least one step i) of applying said fibrous clay and said polymer binder on said textile fabric substrate.

In a preferred embodiment, step i) comprises the following sub-steps:
First, the fibrous clay is preferably mixed with the polymer binder. In a preferred embodiment, mixing is done in dry state by mixing powders of fibrous clay and polymer binder. In another preferred embodiment, mixing is done in wet state by mixing the fibrous clay into a polymer binder dispersion in a solvent, e.g. water.

Second, the mixture of fibrous clay and polymer binder is preferably applied to the textile fabric substrate with standard techniques known in the textile industry. Powder mixtures are preferably applied by e.g. powder scattering or roller transfer. Wet mixtures of fibrous clay and polymer binder are preferably applied by means impregnation and/or coating techniques, e.g. foulard impregnation, knife-coating, roller-coating, spray coating, kiss-coating, screen printing and/or inkjet printing.

Third, the composite material is preferably dried and/or cured at elevated temperature in order to fix fibrous clay and polymer binder on the textile fabric substrate. In a preferred embodiment, drying and/or curing is realized by using standard techniques, e.g. in an oven, with contact drying and/or IR-heaters.

In another preferred embodiment, step i) is implemented by applying the fibrous clay without prior mixing with the polymer binder. For this, the polymer binder is applied onto the textile fabric substrate, e.g. with suitable techniques discussed above. In a further step, the powder of fibrous clay is preferably applied, e.g. by powder scattering or roller transfer and the composite material is dried. It is advantageous in some embodiments, e.g. in order to improve the fixation of the fibrous clay, to apply a second layer of the polymer binder, again by using techniques discussed above, followed by subsequent drying of the composite material. Also, one or more textile fabric substrates can be combined in a layered construction to form a multi-layer or sandwich construction.

### The electrical cable

A third object of the present invention is an electrical cable comprising at least one electrically conductive elongated element and at least one crosslinked polymer layer, wherein said electrical cable further comprises a composite layer made from a composite material as defined in the first object of the present invention.

### The electrically conductive elongated element

The electrically conductive elongated element can be a single-strand conductor such as a metal wire or a multi-strand conductor such as a plurality of metal wires, for example.

The electrically conductive elongated element can be made of aluminium, aluminium alloy, copper, copper alloy, or one of their combinations.

### The composite layer

The composite layer preferably surrounds the electrically conductive elongated element.

In one preferred embodiment, the composite layer is directly in physical contact with the crosslinked polymer layer.

In one embodiment, the composite layer surrounds the crosslinked polymer layer.

In another embodiment, the crosslinked polymer layer surrounds the composite layer.

In yet another embodiment, the cable comprises a first composite layer and a second composite layer, so that the first composite layer surrounds the crosslinked polymer layer, and the crosslinked polymer layer surrounds the second composite layer.

### The crosslinked polymer layer

In the present invention, the expression "crosslinked layer" signifies a layer with a gel content in accordance with the ASTM standard D2765-01 (extraction with xylene) which is at least approximately 40%, preferably at least approximately 50%, preferably at least approximately 60%, particularly preferably at least approximately 70%, and more particularly preferably at least approximately 80%.

The crosslinked polymer layer may be an electrically insulating layer or a semi-conductive layer.

In the present invention, the term "electrically insulating layer" means a layer the electrical conductivity of which may be at most 1 × 10⁻⁸ S/m (Siemens per metre), preferably at most 1 × 10⁻⁹ S/m, and particularly preferably at most 1 × 10⁻¹⁰ S/m (Siemens per metre), measured at 25°C under DC conditions.

In the present invention, the term "semi-conductive layer" means a layer the electrical conductivity of which may be strictly higher than 1 × 10⁻⁸ S/m (Siemens per metre), preferably at least 1 × 10⁻³ S/m, and preferably may be less than 1 × 10³ S/m, measured at 25°C under DC conditions.

The crosslinked polymer layer can be obtained from a crosslinkable polymer composition comprising at least one polymer material and at least one peroxide crosslinking agent.

### The crosslinkable polymer composition

### The peroxide crosslinking agent

The crosslinkable polymer composition is crosslinked by peroxide crosslinking processes well known to a person skilled in the art.

The crosslinkable polymer composition can comprise a sufficient amount of one or more crosslinking agents, in order to obtain said crosslinked polymer layer.

The crosslinkable composition of the invention may comprise approximately from 0.2 to 2% by weight; and preferably from 1 to 2% by weight of peroxide crosslinking agent, with respect to the total weight of the crosslinkable polymer composition.

Preferably, the peroxide crosslinking agent may be selected from organic peroxides.

Examples of organic peroxides which may be cited are peroxides of the tert-butylcumyl peroxide type or of the dicumyl peroxide, 2,5-dimethyl-2,5-di(tert-butylperoxy)hexyne-3 or 1,3 and 1,4-bis (*tert-*butylperoxyisopropyl)benzene type. Dicumyl peroxide is preferred for High voltage applications.

### The polymer material

The crosslinkable polymer composition of the invention can comprise at least 50% by weight of polymer material, preferably at least 70% by weight of polymer material and preferably at least 90% by weight of polymer material, with respect to the total weight of the crosslinkable polymer composition.

The polymer material of the invention comprises one or more polymer(s), the term polymer being able to be understood by any type of polymer well known to a person skilled in the art, such as homopolymer or copolymer (e.g., block copolymer, random copolymer, terpolymer and the like).

The polymer is preferably of the thermoplastic type.

In a specific embodiment, the polymer material, or in other words the polymer matrix of the polymer composition, can comprise one or more olefin polymers (i.e. polyolefin), and preferably one or more ethylene polymers (i.e. polyethylene). An olefin polymer is conventionally a polymer obtained from at least one olefin monomer.

More particularly, the polymer material comprises more than 50% by weight of olefin polymer(s), preferably more than 70% by weight of olefin polymer(s), and particularly preferably more than 90% by weight of olefin polymer(s), with respect to the total weight of polymer material in the crosslinkable polymer composition. Preferably, the polymer material is composed solely of one or more olefin polymer(s).

In a preferred embodiment, the polymer material (respectively the olefin polymer) comprises or consists of a low density polyethylene (LDPE).

In the present invention, the term "low density" means having a density ranging from about 0.91 to 0.925, said density being measured according to ISO 1183A (at a temperature of 23°C).

### Additives

The crosslinkable polymer composition may further comprise at least one antioxidant.

The antioxidants are preferably selected from hindered phenols, sulphur-based antioxidants, phosphorus-based antioxidants, amine type antioxidants, and a mixture thereof.

Examples of hindered phenols which may be cited are pentaerythritol tetrakis(3-(3,5-di-*tert*-butyl-4-hydroxyphenyl)propionate) (Irganox^{®} 1010), octadecyl 3-(3,5-di-*tert*-butyl-4-hydroxyphenyl)propionate (Irganox^{®} 1076), 1,3,5-trimethyl-2,4,6-tris(3,5-di-*tert*-butyl-4-hydroxybenzyl)benzene (Irganox^{®} 1330), 4,6-bis(octylthiomethyl)-o-cresol (Irgastab^{®} KV10 or Irganox^{®} 1520), 2,2'-thio bis(6-*tert*-butyl-4-methylphenol) (Irganox^{®} 1081), 2,2'- thiodiethylene bis[3-(3,5-di-*tert*-butyl-4-hydroxyphenyl) propionate] (Irganox^{®} 1035), 2,2'-methylene bis(6-*tert*-butyl-4-methylphenol), 1,2-bis(3,5-di-tert-butyl-4-hydroxyhydrocinnamoyl) hydrazine (Irganox^{®} MD 1024), tris(3,5-di-*tert*-butyl-4-hydroxybenzyl) isocyanurate (Irganox^{®} 3114), or 2,2'-oxamido-bis(ethyl-3(3,5-di-*tert*-butyl-4-hydroxyphenyl)propionate).

Examples of sulphur-based antioxidants which may be cited are thioethers such as didodecyl-3,3'-thiodipropionate (Irganox^{®} PS800), distearyl thiodipropionate or dioctadecyl-3,3'-thiodipropionate (Irganox^{®} PS802), bis[2-methyl-4-{3-n-alkyl (C₁₂ or C₁₄) thiopropionyloxy}-5-*tert*-butylphenyl]sulphide, thiobis-[2-*tert*-butyl-5-methyl-4,1-phenylene] bis [3-(dodecylthio)propionate], or 4,6-bis(octylthiomethyl)-o-cresol (Irganox^{®} 1520 or Irgastab^{®} KV10).

Examples of phosphorus-based antioxidants which may be cited are phosphites or phosphonates, such as tris(2,4-di-*tert*-butyl-phenyl) phosphite (Irgafos^{®} 168) or bis(2,4-di-*tert*-butylphenyl)pentaerythritol diphosphite (Ultranox^{®} 626).

Examples of amine type antioxidants which may be cited are phenylene diamines (e.g. paraphenylene diamines such as 1PPD or 6PPD), diphenylamine styrenes, diphenylamines, 4-(1-methyl-1-phenylethyl)-N-[4-(1-methyl-1-phenylethyl)phenyl]aniline (Naugard 445), mercaptobenzimidazoles, or polymerized 2,2,4-trimethyl-1,2 dihydroquinoline (TMQ).

The crosslinkable polymer composition may typically comprise approximately 0.02% to 2% by weight, and preferably approximately 0.05% to 1% by weight of antioxidant, with respect to the total weight of the crosslinkable polymer composition.

The crosslinkable polymer composition may not comprise other additives such as plasticizers, lubricants, compatibilizing agents, or coupling agents such as silane-based compounds. Indeed, such additives can interfere with crosslinking reaction.

When the crosslinked polymer layer is a semi-conductive layer, the crosslinkable polymer composition can further comprise at least one conductive filler, in particular in a sufficient quantity to render the layer semi-conductive.

The crosslinkable polymer composition may comprise at least approximately 6% by weight of conductive filler, preferably at least approximately 10% by weight of conductive filler, more preferably at least approximately 15% by weight of conductive filler and yet more preferably at least approximately 25% by weight of conductive filler, with respect to the total weight of the crosslinkable polymer composition.

The crosslinkable polymer composition may comprise at most approximately 45% by weight of conductive filler, and preferably at most approximately 40% by weight of conductive filler, with respect to the total weight of the crosslinkable polymer composition.

The crosslinkable polymer composition may comprise from about 6% by weight to 45% by weight of conductive filler, preferably from about 10% by weight to 45% by weight of conductive filler, more preferably from about 15% by weight to 45% by weight of conductive filler, and even more preferably from about 25% by weight to 45% by weight of conductive filler, with respect to the total weight of the crosslinkable polymer composition.

The crosslinkable polymer composition may comprise from about 6% by weight to 40% by weight of conductive filler, preferably from about 10% by weight to 40% by weight of conductive filler, more preferably from about 15% by weight to 40% by weight of conductive filler, and even more preferably from about 25% by weight to 40% by weight of conductive filler, with respect to the total weight of the crosslinkable polymer composition.

The conductive filler is preferably an electrically conductive filler.

The conductive filler may advantageously be selected from carbon blacks, graphites, carbon nanotubes and a mixture thereof.

In the case the crosslinked polymer layer is an electrically insulating layer, the crosslinkable polymer composition does not comprise any (electrically) conductive filler and/or does not comprise any semiconductive filler.

### The cable

In one preferred embodiment, the electrical cable comprises said at least one electrically conductive elongated element, and at least one semi-conductive layer surrounding the electrically conductive elongated element, wherein said semi-conductive layer is a crosslinked polymer layer as defined in the present invention (i.e. obtained from a crosslinkable polymer composition as defined in the present invention).

In a preferred embodiment, the composite layer is in direct physical contact with the semi-conductive layer.

The semi-conductive layer can be an inner or an outer semi-conductive layer.

In a first variant, the semi-conductive layer is an inner semi-conductive layer. In said first variant, said inner semi-conductive layer preferably surrounds the composite layer, and the composite layer preferably surrounds the electrically conductive elongated element.

In a second variant, the semi-conductive layer is an outer semi-conductive layer. In said second variant, said composite layer preferably surrounds said outer semi-conductive layer, and said outer semi-conductive layer preferably surrounds the electrically conductive elongated element.

In a preferred embodiment, the electrical cable further comprises an electrically insulating layer, advantageously obtained from a crosslinkable polymer composition as defined in the present invention.

According to the second variant defined above, the outer semi-conductive layer preferably surrounds the electrically insulating layer.

According to the first variant defined above, the electrically insulating layer preferably surrounds the inner semi-conductive layer.

In a particular preferred embodiment of the invention, the electrical cable comprises said electrically conductive elongated element, a first inner semi-conductive layer surrounding the electrically conductive elongated element, an electrically insulating layer surrounding the first inner semi-conductive layer, and a second outer semi-conductive layer surrounding the electrically insulating layer, wherein at least one of said layers is a crosslinked polymer layer as defined in the present invention, and preferably all said layers are a crosslinked polymer layer as defined in the present invention (i.e. obtained from a crosslinkable polymer composition as defined in the present invention).

In a preferred embodiment, the cable comprises preferably a first composite layer and a second composite layer, as defined in the present invention, so that the first composite layer surrounds the second outer semi-conductive layer, the second outer semi-conductive layer surrounds the electrically insulating layer, the electrically insulating layer surrounds the first inner semi-conductive layer, the first inner semi-conductive layer surrounds the second composite layer, and the second composite layer surrounds the electrically conductive elongated element, wherein the first and second composite layers are advantageously directly in physical contact with the second outer semi-conductive layer and the first inner semi-conductive layer respectively.

In one particular embodiment, the first inner semi-conductive layer, the electrically insulating layer and the second outer semi-conductive layer constitute a three-layer insulation. In other words, the electrically insulating layer is directly in physical contact with the first inner semi-conductive layer, and the second outer semi-conductive layer is directly in physical contact with the electrically insulating layer.

The electrical cable may also include an outer protective sheath surrounding the second semi-conductive layer and may be in direct physical contact with it.

The outer protective sheath can be an electrically insulating sheath.

This outer protective sheath may be produced in a conventional manner from appropriate thermoplastic materials such as HDPEs, MDPEs or LLDPEs.

Other layers such as layers which expand in the presence of moisture, may be added between the second semi-conductive layer and the metallic screen if it is present, and/or between the metallic screen and the outer sheath if they are present, these layers ensuring that the length of the cable is impermeable to water. The electrically conductive elongated element of the cable of the invention may also comprise materials which expand in the presence of moisture in order to obtain a "sealed core".

The electrical cable of the invention preferably does not contain halogenated compounds. These halogenated compounds may be of any nature such as, for example, fluorinated polymers or chlorinated polymers such as polyvinyl chloride (PVC), halogenated plasticizers, halogenated mineral fillers, etc.

The electrical cable may also include an electric (e.g. metal) shield surrounding the second semi-conductive layer. In this case, the electrically insulating protective sheath surrounds said electric shield and the electric shield is between the electrically insulating protective sheath and the second semi-conductive layer.

This metal shield can be a so-called "wire" shield composed of a set of copper or aluminium conductors arranged around and along the second semi-conductive layer, a so-called "banded" shield composed of one or more conductive metal strips made of copper or aluminium, optionally laid in a helix around the second semi-conductive layer, or a conductive metal strip made of aluminium laid longitudinally around the second semi-conductive layer and sealed with glue in the overlapping areas of parts of said strip, or a so-called "sealed" shield of the metal tube type optionally made of lead or lead alloy and surrounding the second semi-conductive layer. This last type of shield is used in particular to protect against moisture that tends to penetrate the electrical cable in a radial direction.

The metal shield of the electrical cable of the invention may include a so-called "wire" shield and a so-called "sealed" shield or a so-called "wire" shield and a so-called "banded" shield.

All types of metal shields can act as earthing devices for the electrical cable and can thus carry fault currents, for example in the event of a short circuit in the network concerned.

Other layers, such as layers that swell in the presence of moisture, can be added between the second semi-conductive layer and the metal shield, these layers ensuring the longitudinal watertightness of the electrical cable.

The electrical cable of the invention concerns more particularly the field of electrical cables operating in direct current (DC).

The crosslinked polymer layer is preferably an extruded layer.

A fourth object of the present invention is a process for the manufacture of an electrical cable as defined in the third object of the present invention, wherein said process comprises at least the following steps:
- providing said at least electrically conductive elongated element,
- extruding at least one crosslinkable polymer composition around the electrically conductive elongated element,
- crosslinking the crosslinkable polymer composition, so as to form said crosslinked polymer layer, and
wherein said process further comprises after crosslinking the crosslinkable polymer composition, applying said composite layer as defined in the third object of the present invention around the electrically conductive elongated element.

The crosslinkable polymer composition is as defined in the third object of the present invention.

Extrusion step can be carried out by techniques well known to the skilled person, for example using an extruder.

In extrusion step, the composition at the extruder exit is said to be "non-crosslinked", the temperature and the implementation time within the extruder being optimised accordingly.

The (peroxide-route) crosslinking step of the crosslinkable polymer composition according to the invention may be performed under the action of heat and pressure, for example using a vulcanization tube under nitrogen pressure, this crosslinking technique being well known to those skilled in the art.

The composite layer is made from the composite material as defined in the first object of the present invention.

When the composite material is a tape or a ribbon, the composite layer is obtained by winding or wrapping said tape or ribbon around said electrically conductive elongated element or said extruded crosslinkedable polymer composition.

The winding may also be carried out with overlapping areas.

The winding may be spiral winding.

The process can further comprise, before applying the composite layer, a step of degassing the crosslinked polymer layer, more particularly at a temperature ranging from 40 to 80°C.

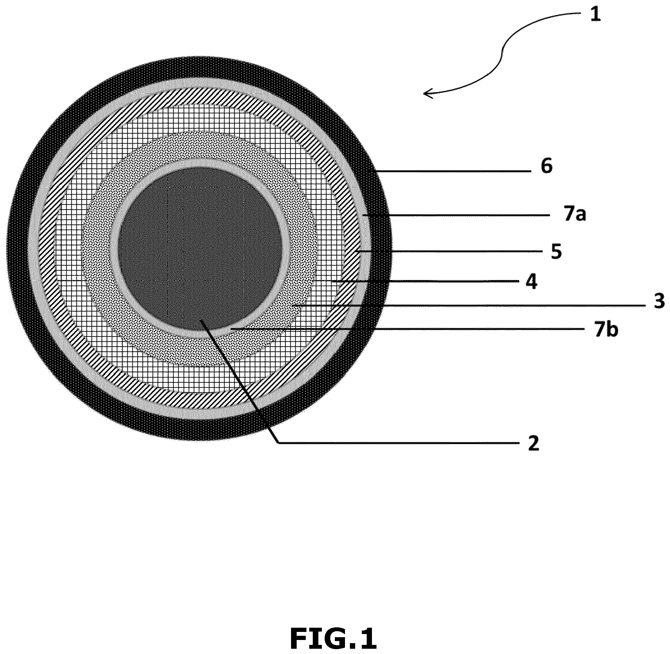

Other characteristics and advantages of the present invention will emerge in the light of the description of a non-limiting example of an electrical cable according to the invention, given with reference to figure 1 showing a schematic view in perspective and in cross section of an electrical cable according to one preferred embodiment in accordance with the invention.

For reasons of clarity, only the elements that are essential for understanding the invention have been schematically represented, and without being drawn to scale.

The high voltage electrical cable 1, illustrated in figure 1, comprises an electrically conductive elongated element 2, especially made of copper or aluminum. Successively and coaxially around this electrically conductive elongated element 2, the electrical cable 1 also comprises a first semi-conductive layer 3 known as the "inner semi-conductive layer", an electrically insulating layer 4, a second semi-conductive layer 5 known as the "outer semi-conductive layer", and an outer protective sheath 6, at least one of said layers 3, 4, and 5 being obtained from a crosslinkable polymer composition according to the invention. Layers 3, 4, and 5 are extruded and crosslinked layers.

Additionally, the cable 1 comprises two composite layers 7a and 7b made from a composite material as defined in the invention, wherein the composite layer 7a surrounds the second semi-conductive layer 5, and the first semi-conductive layer 3 surrounds the composite layer 7b.

### Example 1

Some tests were carried out to evaluate the ability of the fibrous clay according to the invention to absorb crosslinking by-products such as acetophenone or cumyl alcohol.

For that matter, a sample containing a fibrous clay, or for comparative test an activated carbon, is being humidified for 24h in a room with 50% humidity.

Then, each sample is put in a desiccator containing a crosslinking by-product (acetophenone or cumyl alcohol). The desiccator is stayed in oven at 70°C and is regularly weighted each 2 days until 700 h of impregnation of the crosslinking by-product with the fibrous clay or the activated carbon.

The table 1 below shows the results obtained, namely the adsorption (in %) of cumyl alcohol or acetophenone by the fibrous clay (samples 1 and 3) and for comparison by activated carbon (samples 2 and 4).

**TABLE 1**

| Samples | Sample 1 | Sample 2 (^{∗}) | Sample 3 | Sample 4 (^{∗}) |
|---|---|---|---|---|
| Amount cumyl alcohol (g) | - | - | 52.4 | 50 |
| Amount acetophenone (g) | 82 | 82 | - | - |
| Amount fibrous clay (g) | 2.58 | - | 5.68 | - |
| Amount activated carbon (g) | - | 3.75 | - | 3.99 |
| Adsorption of acetophenone (% at 700 h) | 54 | 40 | - | - |
| Adsorption of cumyl alcohol (% at 700 h) | - | - | 130 | 35 |

| | | | | |
|---|---|---|---|---|
| (^{∗}) Comparative compositions not forming part of the invention | | | | |

The origin of the compounds in Table 1 is as follows:
- cumyl alcohol, Sigma Aldrich, purity > 99%;
- acetophenone, Sigma Aldrich, purity > 99%;
- fibrous clay: sepiolite clay marketed by Tolsa with the product name Pangel S9;
- activated carbon marketed by Cabot with the product name EXP1431.

From Table 1 above, it is apparent that adsorption of cumyl alcohol or acetophenone is improved in an humidified sample of fibrous clay by comparison with an humidified sample of activate carbon.

### Example 2

Some tests were carried out to evaluate the ability of the composite material according to the invention to absorb crosslinking by-products such as acetophenone or cumyl alcohol.

A composite material according to the invention is prepared according to the following process:
First, a textile fabric substrate is prepared in form of a chemically bonded carded nonwoven. The area weight of the textile fabric substrate is 56 g/m². The textile fabric substrate consists of polyester fibers with a weight share of 33 g/m² and a fiber binding agent with a weight share of 23 g/m². The fiber binding agent is a polystyrene-acrylic binder containing conductive carbon black.

Second, the fibrous clay is mixed with a dispersion of the polymer binder in water. For this, 4 g of sepiolite clay Pangel S9 (Tolsa) is stirred in 13 g (dry weight) of water-based dispersion of a self-crosslinkable polyacrylate binder, Primal Eco 32 by Dow Chemicals. 6 g (dry weight) of conductive carbon black and 4 g of dispersing agent are added as additive.

Third, the textile fabric substrate is coated with the mixture of fibrous clay, polymer binder, and additives by using a knife-coating device. The coated material is subsequently dried in an oven at 160°C for 10 minutes.

A composite material according to the invention is obtained with an area weight of 201 g/m². The share of fibrous clay is 10 wt.-% with respect to the total weight of the composite material. The share of polymeric binder is 62 wt.-% with respect to the total weight of the composite material.

The obtained composite material according to the invention shows a thickness of 0.41 mm, a tensile strength in machine direction of 285 N/5cm, an air permeability of 159 l/(m^{2∗}s) at 200 Pa air pressure and a volume resistance smaller than 1 MOhm^{∗}cm.

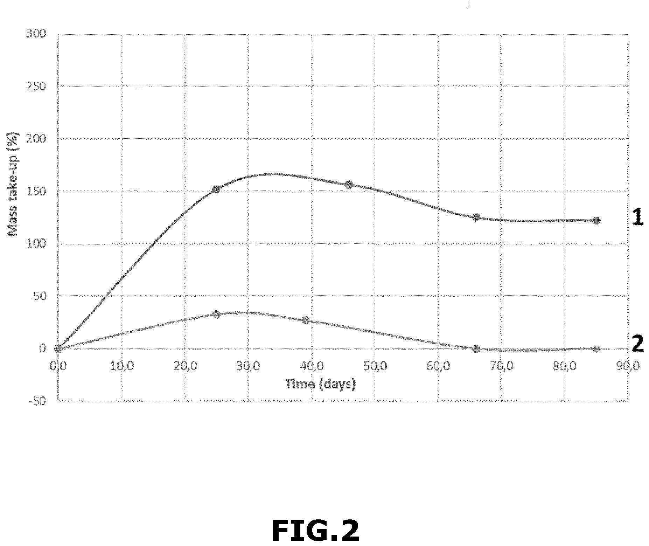

A composite material as prepared in example 2 and for comparison a semi-conductive water blocking woven tape commercialized under the name GFS 5810 from Geca-Tapes, are each being humidified for 24h in a room with 50% humidity, and then put in a desiccator containing crosslinking by-products (acetophenone 1/3 by weight and cumyl alcohol 2/3 by weight, with respect to the total weight of acetophenone and cumyl alcohol). The desiccators are stayed in oven at 70°C and are regularly weighted each 2 days. Figure 2 shows the absorption of by-products with the composite material (curve 1) *vs* with the commercial tape (curve 2).

## Claims

1. A composite material, wherein it comprises at least one textile fabric substrate, at least one polymer binder, and at least one fibrous clay.

2. The composite material according to claim 1, wherein the fibrous clay is a phyllosilicate.

3. The composite material according to claim 1 or claim 2, wherein the fibrous clay is a phyllosilicate selected from the group consisting of sepiolites, palygorskites, and attapulgites.

4. The composite material according to any one of the preceding claims, wherein the fibrous clay is a fibrous nanoclay, where said fibrous clay has a smallest dimension which is less than 250 nm.

5. The composite material according to any one of the preceding claims, wherein the fibrous clay has a specific surface area of at least 80 m²/g, said specific surface area being calculated by the BET method (i.e. the Brunauer, Emmett and Teller method, 1938).

6. The composite material according to any one of the preceding claims, wherein it comprises from 1% to 80% by weight of fibrous clay, preferably from 3% to 30% by weight of fibrous clay or from 30% to 60% by weight of fibrous clay, with respect to the total weight of the composite material.

7. The composite material according to any one of the preceding claims, wherein the textile fabric substrate is a woven fabric or a nonwoven fabric.

8. The composite material according to any one of the preceding claims, wherein said composite material is coated with a superabsorbent material, e.g. with partially neutralized polyacrylic acid, polymethacrylic acid, polyvinyl sulfonic acid, polyacrylamide, cellulose derivative, starch-based derivative and/or their copolymer, and/or mixtures.

9. The composite material according to any one of claims 1 to 7, wherein the composite material forms a part of a multilayer or sandwich construction where a superabsorbent coating is placed between two layers of said composite material.

10. The composite material according to any one of the preceding claims, wherein it is in the form of a tape or ribbon having a thickness ranging from 0.1 mm to 0.8 mm.

11. A method for the manufacture of the composite material as defined in any one of the preceding claims, wherein said method comprises at least one step i) of applying said fibrous clay and said polymer binder on said textile fabric substrate.

12. An electrical cable (1) comprising at least one electrically conductive elongated element (2) and at least one crosslinked polymer layer (3, 4, 5) wherein said electrical cable (1) further comprises a composite layer (7a, 7b) made from a composite material as defined in any one of claims 1 to 10.

13. The electrical cable according to claim 12, wherein the composite layer (7a, 7b) is directly in physical contact with the crosslinked polymer layer (3, 4, 5).

14. The electrical cable (1) according to claim 12 or claim 13, wherein the crosslinked polymer layer (3, 4, 5) is obtained from a crosslinkable polymer composition comprising at least one polymer material and at least one peroxide crosslinking agent.

15. A process for the manufacture of an electrical cable (1) as defined in any one of claims 12 to 14, wherein said process comprises at least the following steps:
- providing said at least electrically conductive elongated element (2),
- extruding at least one crosslinkable polymer composition around the electrically conductive elongated element (2),
- crosslinking the crosslinkable polymer composition, so as to form said crosslinked polymer layer (3, 4, 5), and
wherein said process further comprises, after crosslinking the crosslinkable polymer composition, applying said composite layer (7a, 7b) around said electrically conductive elongated element (2).
